# FASCICULE DE BREVET EUROPEEN

(11) **EP 1 449 443 B1**
(45) Date de publication et mention de la délivrance du brevet: **06.10.2010**
(21) Numéro de dépôt: 04364017.6
(22) Date de dépôt: 18.02.2004
(51) Int. Cl.: A23L 3/36, A23B 4/06, A23B 7/04

(54) **Dispositif de refroidissement de produits alimentaires, intégrant des moyens de formation d'un flux d'air froid lamellaire**
Vorrichtung zur Kühlung von Nahrungsmitteln mit einer Einrichtung zur Bildung eines lamellaren Kaltluftstroms
Apparatus for cooling food products , integrating means for forming a lamellar cold air flux

(30) Priorité: 21.02.2003 FR 0302181
(43) Date de publication de la demande: 25.08.2004
(73) Titulaire: C.I.M.S., 72032 Sablé-sur-Sarthe (FR)
(72) Inventeur: Munoz, M. Yves, 72300 Auvers le Hamon (FR)
(74) Mandataire: Larcher, Dominique

(56) Documents cités:
- EP-A- 0 986 966
- WO-A-01/81843
- WO-A-90/15294
- GB-A- 1 524 317
- US-A- 3 393 532
- US-A- 4 555 914
- PATENT ABSTRACTS OF JAPAN vol. 010, no. 063 (C-332), 13 mars 1986 (1986-03-13) -& JP 60 203137 A (DAIKIN KOGYO KK), 14 octobre 1985 (1985-10-14)

## Description

L'invention concerne le domaine du froid industriel. Plus précisément, l'invention concerne les dispositifs de refroidissement de produits, en particulier alimentaires, du type de ceux dans lesquels les produits défilent dans une enceinte de refroidissement avant conditionnement.

Dans l'industrie agroalimentaire, les exigences normatives et réglementaires en matière de chaîne du froid sont de plus en plus strictes. Suivant la nature du produit alimentaire et la durée de conservation que l'on envisage pour celui-ci, différentes techniques de refroidissement peuvent être utilisées.

Parmi celles-ci on connaît notamment les tunnels de refroidissement, selon lesquels les produits alimentaires défilent dans une enceinte intégrant des moyens de génération d'air froid, appelés également batterie d'air froid, le défilement des produits étant assuré par un film déroulant sur lequel ces produits reposent. Généralement, le film déroulant chemine à l'intérieur de l'enceinte en glissant sur une sole refroidie.

Classiquement, les moyens de génération d'air froid intégrés dans l'enceinte de ces tunnels comprennent un ventilateur, formant moyen de soufflage.

On connaît notamment une technique selon laquelle la batterie d'air froid est constituée par un échangeur à ailettes placé entre le ventilateur d'air froid et les produits à refroidir, aucun moyen spécifique n'étant prévu pour répartir l'air froid de façon homogène à l'intérieur de l'enceinte.

Cette technique présente plusieurs inconvénients.

En premier lieu, l'air froid n'étant pas réparti de façon homogène à l'intérieur de l'enceinte, il est généralement nécessaire de maintenir plus longtemps les produits à l'intérieur de l'enceinte pour atteindre le refroidissement désiré.

En second lieu, l'efficacité d'un tel tunnel dépend de la distance qui sépare l'échangeur à ailettes des produits à refroidir. En effet, si l'échangeur à ailettes est trop près des produits, et que la vitesse du flux d'air froid soufflé atteint un certain seuil, les produits risquent d'être éjectés en direction des parois de l'enceinte. A l'inverse, une distance trop importante entre l'échangeur à ailettes et les produits entraînera un refroidissement moins efficace, au moins dans certaines zones de l'enceinte.

De plus, certaines turbulences peuvent être remarquées, ce qui a notamment pour effet de soulever le film par rapport à la sole, ce qui nuit au transfert du froid de la sole refroidie vers les produits.

On connaît également une autre technique selon laquelle on tente de répartir l'air froid à l'intérieur de l'enceinte à l'aide d'une plaque pourvue d'une pluralité de trous, cette plaque étant placée entre le ventilateur d'air froid et les produits à refroidir.

Cette technique présente elle aussi plusieurs inconvénients.

En effet, la présence d'une telle plaque induit une perte de charge en ce qui concerne le flux d'air froid soufflé.

Pour compenser cette perte de charge, on prévoit généralement d'équiper le tunnel de refroidissement d'un ventilateur plus puissant. Cependant, cette augmentation de puissance est obtenue en ayant recours à un moteur de capacité plus importante qui a pour effet d'induire un dégagement de chaleur également plus important, ce qui, bien évidemment, porte atteinte à l'objectif recherché.

En outre, cette technique n'assure pas correctement le plaquage du film sur la sole, ce qui, comme indiqué précédemment, nuit au transfert du froid de la sole refroidie vers les produits.

D'autres techniques ont également été proposées par l'art antérieur :
- le document WO-01/181843 qui décrit un dispositif pour optimiser la surgélation en continu de produits en vrac, à l'aide d'une installation qui met en oeuvre des évaporateurs et des moyens formant caisson en sortie d'évaporation et prévus pour élargir la section de soufflage et amener celle-ci au plus près des produits. L'installation comprend une enceinte en forme de tunnel dans laquelle circule un convoyeur portant un tapis. A l'aplomb des évaporateurs sont disposées des parois inclinées par rapport à la verticale (pour élargir la section de soufflage). La section de soufflage ainsi agrandie est équipée d'une série de cornières disposées côte à côte avec un espace entre celles-ci de façon à engendrer des rideaux d'air froid perpendiculaires au sens de déplacement des produits ;
- le document US-A-3 393 532 qui décrit une installation de réfrigération présentant en partie inférieure, au travers de la surface de soufflage, une série de cornières disposées côte à côte et espacées entre elles pour que le flux d'air froid soit forcé entre elles, et dans laquelle les cornières sont prolongées par des volets articulés qui peuvent être orientés vers l'avant ou vers l'arrière par rapport au sens de passage des produits.

L'invention a notamment pour objectif de pallier les inconvénients de l'art antérieur.

Plus précisément, l'invention a pour objectif de proposer un tunnel de refroidissement qui permette de réduire notablement le temps de refroidissement des produits par rapport aux solutions de l'art antérieur.

L'invention a également pour objectif de fournir un tel tunnel de refroidissement qui assure une meilleure répartition de l'air froid dans l'enceinte comparé aux techniques connues.

L'invention a aussi pour objectif de fournir un tel tunnel de refroidissement qui soit simple de conception et facile à mettre en oeuvre.

Un autre objectif de l'invention est de fournir un tel tunnel de refroidissement qui soit peu coûteux à fabriquer et qui permette d'envisager des gains en termes d'exploitation.

Ces objectifs, ainsi que d'autres qui apparaîtront par la suite, sont atteints grâce à l'invention qui a pour objet un dispositif de refroidissement de produits alimentaires, selon la revendication 1.

De cette façon, on obtient une bonne répartition de l'air froid à l'intérieur de l'enceinte, et ceci en supprimant, ou à tout le moins en limitant les pertes de charges constatées dans certaines des techniques de l'art antérieur.

Aussi, du fait de la meilleure répartition de l'air froid dans l'enceinte, on améliore l'efficacité du refroidissement, ce qui permet d'envisager une réduction du temps de présence des produits dans l'enceinte, et donc d'augmenter les cadences en termes de vitesse de défilement des produits.

Selon un premier mode de réalisation, lesdites fentes sont sensiblement perpendiculaires à la direction de défilement desdits produits. Dans ce cas, selon une solution préférée, lesdites fentes s'étendent sensiblement sur toute la largeur de ladite sole, lesdites fentes étant réparties sensiblement sur toute la longueur de ladite sole, par rapport à l'axe de défilement desdits produits.

Selon un deuxième mode de réalisation, lesdites fentes s'étendent sensiblement sur toute la longueur de ladite sole, lesdites fentes étant réparties sensiblement sur toute la largeur de ladite sole, par rapport à l'axe de défilement desdits produits.

Ainsi, selon l'un ou l'autre de ces modes de réalisation, l'air froid est dirigé de façon homogène vers l'ensemble des produits, en les plaquant efficacement sur le film déroulant.

En outre, le flux d'air froid est appliqué sur toute la surface du film, le maintenant plaqué contre la sole, contrairement à certaines techniques de l'art antérieur. Ceci contribue à augmenter la vitesse de refroidissement des produits, dans la mesure où on améliore le coefficient de transfert thermique par convection, de la sole vers les produits et par l'intermédiaire du film (qui assure un contact permanent avec la sole d'une part et les produits d'autre part).

Selon une solution préférée, ledit caisson comprend des moyens de guidage dudit air froid vers lesdites fentes.

De cette façon, l'intégralité du flux d'air froid pulsé par les moyens de soufflage est canalisé vers les fentes du caisson, assurant par conséquent au dispositif un rendement optimisé.

Selon l'invention, au moins certaines desdites fentes sont bordées, au moins sur leur longueur, par deux parois longitudinales se faisant face et convergeant vers lesdites fentes.

Selon l'invention, lesdites parois longitudinales sont préférentiellement reliées par des parois latérales de façon à former une tuyère.

De telles tuyères contribuent à l'obtention d'un effet pulsé de l'air froid en direction des produits, assurant une action directe et soutenue de l'air froid sur les produits.

Selon l'invention, lesdites parois latérales sont essentiellement divergentes l'une par rapport à l'autre, en direction desdites fentes.

Ainsi, le flux d'air froid en sortie des fentes est dirigé vers une zone s'étendant au-delà des extrémités des fentes, ce qui contribue à répartir l'air froid sur toute la surface de la sole.

Selon l'invention, ledit caisson présente des paires de prolongements en direction des produits et s'étendant à partir des fentes, lesdits prolongements d'une paire bordant la longueur de ladite fente en étant divergents l'un par rapport à l'autre.

Un tel agencement, permet d'élargir le flux d'air en sortie de chacune des fentes.

Toutefois, de façon générale, la forme et les dimensions des tuyères pourront être adaptées en fonction d'un certain nombre de paramètres liés à un refroidissement donné, et notamment :
- la vitesse d'air froid requise ;
- la nature du produit à refroidir ;
- la température de refroidissement recherchée ;
- le débit d'air froid devant être délivré ;
- ...

Selon une solution préférée, ledit caisson est dimensionné de façon à préserver un espace avec les parois de ladite enceinte, de façon à permettre une recirculation de l'air froid, de ladite sole vers lesdits moyens de soufflage.

Le flux d'air suit ainsi une boucle fermée lui permettant d'être refroidi en permanence et de façon continue. La température de refroidissement recherchée peut par conséquent être atteinte rapidement.

Avantageusement, les extrémités desdites tuyères sont écartées les unes des autres.

De cette façon, des passages sont ménagés entre chaque tuyère, favorisant ainsi la remontée de l'air froid à partir de la sole vers les moyens de soufflage.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective d'un dispositif de refroidissement selon l'invention, destiné à être intégré dans une enceinte ;
- la figure 2 est une vue de côté d'un dispositif de refroidissement selon l' invention ;
- la figure 3 est un relevé de courbes de températures mesurées lors du refroidissement d'une sauce à base de tomates à l'aide d'un dispositif selon l'invention ;
- la figure 4 est un relevé de courbes de températures mesurées lors du refroidissement de viande hachée à l'aide d'un dispositif selon l'invention.

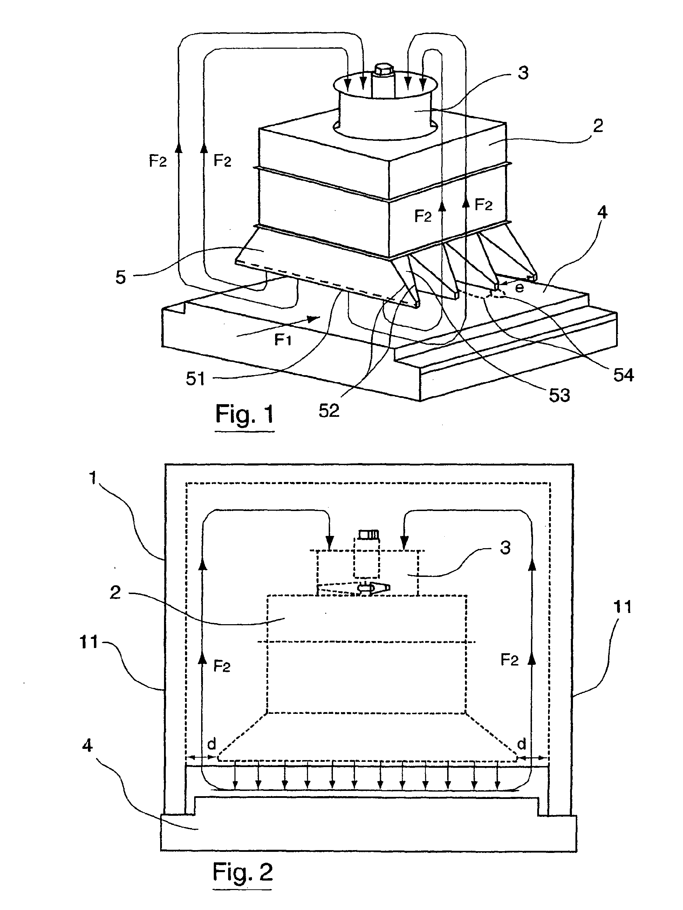

En référence aux figures 1 et 2, un dispositif de refroidissement comprend, de façon connue en soi, une enceinte 1 incluant une batterie d'air froid 2 et un ventilateur 3. Un tel dispositif comprend également une sole 4 refroidie formant support d'un film déroulant (non représenté) sur lequel sont disposés des produits à refroidir, le déplacement de ces produits à l'intérieur de l'enceinte étant assuré par la défilement du film déroulant.

Selon l'invention, l'air froid généré par la batterie 2 est soufflé à l'intérieur d'un caisson pourvu de fentes 51 permettant de générer un flux d'air froid lamellaire dirigé vers les produits.

Selon le présent mode de réalisation, ce caisson est constitué par un ensemble de tuyères 5 conçues et positionnées sous la batterie d'air froid 2 de telle sorte que l'axe longitudinal des fentes 51 soit sensiblement perpendiculaire à l'axe de défilement des produits indiqué par la flèche F1 sur la figure 1.

Comme cela apparaît sur les figures 1 et 2, les fentes 51 des tuyères 5 s'étendent sensiblement sur toute la largeur de la sole 4, les tuyères 5 étant par ailleurs réparties sur toute la longueur de la sole 4.

On note que, selon un autre mode de réalisation envisageable, les tuyères pourraient être conçues et positionnées sous la batterie d'air froid 2 de façon que les fentes dont elles sont pourvues s'étendent sensiblement sur toute la longueur de la sole, en étant réparties sensiblement sur toute la largeur de la sole.

Selon l'invention, les tuyères 5 comprennent deux parois longitudinales 52 qui convergent en direction de la fente 51 correspondante et formant moyens de guidage de l'air froid en direction de celle-ci.

Ces parois longitudinales 52 sont reliées entre elles par des parois latérales 53 qui divergent l'une par rapport à l'autre en direction des fentes 51.

En d'autres termes, chacune des tuyères 5 présente, vue de face en considérant l'axe de défilement des produits, une forme d'éventail ouvert en direction des produits, tandis qu'elle présente un profil en forme d'entonnoir qui se rétrécit en direction des produits à refroidir.

Selon une autre variante de l'invention, illustrée à titre indicatif sur une des tuyères de la figure 1, il est prévu de rapporter en sortie des fentes 51 des prolongements 54 s'étendant en bordure de la fente correspondante, de tels prolongements 54 formant deux surfaces divergentes l'une par rapport à l'autre en direction des produits à refroidir.

Selon une autre caractéristique de l'invention, il est prévu de ménager une distance d entre les tuyères 5 et les parois latérales 11 de l'enceinte 1. Cette distance d forme un passage permettant au flux d'air froid soufflé en direction des produits à refroidir de remonter le long des parois de l'enceinte 1 en direction du ventilateur 3 (tel qu'indiqué par les flèches F2 sur les figures 1 et 2) par lequel le flux d'air est aspiré en vue d'être réinjecté dans la batterie d'air froid 2.

La recirculation du flux d'air froid illustrée par les flèches F2 est en outre favorisée en prévoyant un écartement e (figure 1) entre les tuyères 5.

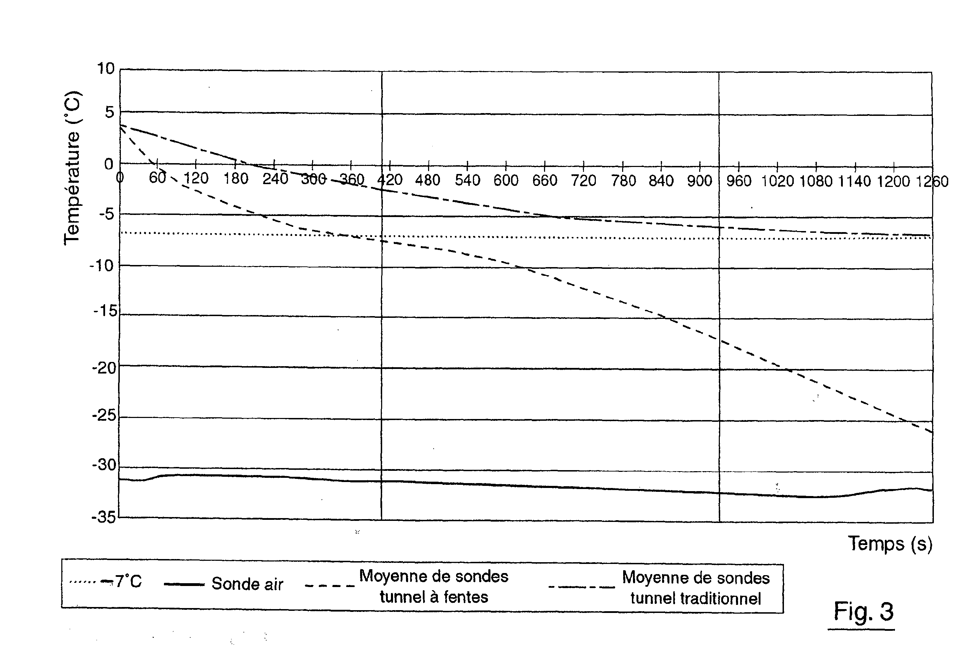

Les performances atteintes par un dispositif de refroidissement selon l'invention vont maintenant être mises en évidence à l'aide des figures 2 et 3.

La figure 3 présente un relevé de températures obtenu, lors du refroidissement d'une sauce à base de tomates présentant une couche de 12 mm sur le film déroulant, d'une part avec un dispositif de refroidissement selon l'art antérieur et, d'autre part, avec un dispositif de refroidissement selon l'invention.

Le dispositif de refroidissement selon l'art antérieur qui a été utilisé pour la présente comparaison avec l'invention inclut une batterie d'air froid disposée à environ 400 mm de la sauce et ne comprend aucun moyen spécifique visant à répartir l'air froid de façon homogène à l'intérieur de l'enceinte.

Dans le dispositif de refroidissement selon l'invention, les fentes des tuyères sont espacées de 50 mm des produits à refroidir.

Tel que cela apparaît clairement sur la figure 3, environ 1200 secondes (soit 20 minutes) sont nécessaires pour refroidir la sauce à - 7°C avec un dispositif de refroidissement selon l'art antérieur, tandis que seulement 360 secondes environ (soit 6 minutes) sont nécessaires pour atteindre le même refroidissement de la sauce avec un dispositif selon l'invention.

Dans le cas de cet exemple, le refroidissement du produit est donc atteint avec un dispositif selon l'invention en quasiment trois fois moins de temps qu'avec un dispositif classique.

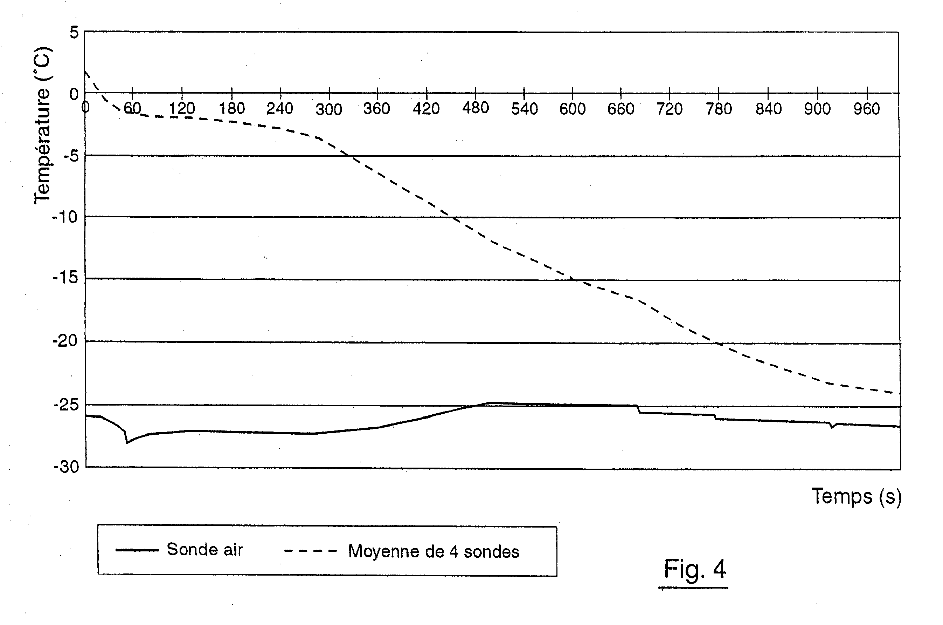

La figure 4 présente un relevé de températures obtenu, lors du refroidissement d'un lot de steacks hachés comprenant 15% de matières grasses et dont le poids unitaire est d'environ 125 g, d'une part avec un dispositif de refroidissement selon l'art antérieur et, d'autre part, avec un dispositif de refroidissement selon l'invention.

On sait qu'environ 35 minutes sont nécessaires pour refroidir les steacks hachés à - 15°C à coeur (et à - 18°C en surface) avec un dispositif de refroidissement selon l'art antérieur, tandis que, tel que cela apparaît clairement sur la figure 4, seulement 10 minutes environ sont nécessaires pour atteindre le même refroidissement de la sauce avec un dispositif selon l'invention, la température de l'air froid soufflé étant dans les deux cas de - 25°C.

Dans le cas de ce deuxième exemple, le refroidissement du produit est donc atteint avec un dispositif selon l'invention en plus de trois fois moins de temps qu'avec un dispositif classique.

La répartition de l'air froid, obtenue en générant un flux d'air froid lamellaire à l'intérieur de l'enceinte grâce au dispositif de refroidissement selon l'invention permet donc de refroidir beaucoup plus rapidement les produits. Des gains d'exploitation conséquents peuvent par conséquent être obtenus grâce à l'invention.

## Revendications

1. Dispositif de refroidissement de produits alimentaires, du type comprenant une enceinte (1) incluant des moyens de génération d'air froid (2) et des moyens de soufflage (3) dudit air froid généré en direction desdits produits, lesdits produits défilant dans ladite enceinte(1) à l'aide d'un film déroulant sur une sole refroidie (4),
**caractérisé en ce qu'**il comprend au moins un caisson dans lequel ledit air froid est soufflé, ledit caisson étant pourvu de fentes (51) de façon à générer un flux d'air froid lamellaire dirigé vers lesdits produits, au moins certaines desdites fentes (51) étant bordées, au moins sur leur longueur, par deux parois longitudinales se faisant face et convergeant vers lesdites fentes (51), lesdites parois longitudinales étant reliées par des parois latérales (53) de façon à former une tuyère (5), lesdites parois latérales (53) étant essentiellement divergentes l'une par rapport à l'autre, en direction desdites fentes (51), et **en ce que** ledit caisson présente des paires de prolongements (54) en direction des produits et s'étendant à partir des fentes (51), lesdits prolongements (54) d'une paire bordant la longueur de ladite fente (51) en étant divergents l'un par rapport à l'autre.

2. Dispositif de refroidissement selon la revendication 1, **caractérisé en ce que** lesdites fentes (51) sont sensiblement perpendiculaires à la direction de défilement desdits produits.

3. Dispositif de refroidissement selon les revendications 1 et 2, **caractérisé en ce que** lesdites fentes (51) s'étendent sensiblement sur toute la largeur de ladite sole (4), et **en ce qu'**elles sont réparties sensiblement sur toute la longueur de ladite sole (4), par rapport à l'axe de défilement desdits produits.

4. Dispositif de refroidissement selon la revendication 1, **caractérisé en ce que** lesdites fentes (51) s'étendent sensiblement sur toute la longueur de ladite sole (4), et **en ce qu'**elles sont réparties sensiblement sur toute la largeur de ladite sole (4), par rapport à l'axe de défilement desdits produits.

5. Dispositif de refroidissement selon l'une quelconque des revendications 1 à 4, **caractérisé en ce que** ledit caisson comprend des moyens de guidage (52) dudit air froid vers lesdites fentes (51).

6. Dispositif de refroidissement selon l'une quelconque des revendications 1 à 5, **caractérisé en ce que** ledit caisson est dimensionné de façon à préserver un espace (d) avec les parois de ladite enceinte (1), de façon à permettre une recirculation de l'air froid, de ladite sole (4) vers lesdits moyens de soufflage (3).

7. Dispositif de refroidissement selon l'une quelconque des revendications 1 à 6 **caractérisé en ce que** les extrémités desdites tuyères (5) sont écartées les unes des autres.

## Claims

1. Cooling device for food products, of the type comprising a chamber (1) which includes means (2) for generating cold air and means (3) for blowing the cold air generated in the direction of the products, the products moving into the chamber (1) by means of a film which travels over a cooled base (4),
**characterised in that** it comprises at least one casing into which the cold air is blown, the casing being provided with apertures (51) so as to generate a lamellar flow of cold air directed towards the products, at least some of the apertures (51) being bounded, at least over the length thereof, by two opposing longitudinal walls which converge towards the apertures (51), the longitudinal walls being connected by lateral walls (53) so as to form a nozzle (5), the lateral walls (53) substantially diverging relative to each other in the direction of the apertures (51), and **in that** the casing has pairs of extensions (54) extending in the direction of the products and from the apertures (51), the extensions (54) of one pair bounding the length of the aperture (51) and diverging relative to each other.

2. Cooling device according to claim 1, **characterised in that** the apertures (51) are substantially perpendicular relative to the movement direction of the products.

3. Cooling device according to claims 1 and 2, **characterised in that** the apertures (51) extend substantially over the entire width of the base (4) and **in that** they are distributed substantially over the entire length of the base (4), relative to the movement axis of the products.

4. Cooling device according to claim 1, **characterised in that** the apertures (51) extend substantially over the entire length of the base (4) and **in that** they are distributed substantially over the entire width of the base (4), relative to the movement axis of the products.

5. Cooling device according to any one of claims 1 to 4, **characterised in that** the casing comprises means (52) for guiding the cold air towards the apertures (51).

6. Cooling device according to any one of claims 1 to 5, **characterised in that** the casing is sized so as to retain a space (d) with respect to the walls of the chamber (1) in order to allow recirculation of the cold air from the base (4) towards the blowing means (3).

7. Cooling device according to any one of claims 1 to 6, **characterised in that** the ends of the nozzles (5) are spaced-apart from each other.

## Patentansprüche

1. Vorrichtung zur Kühlung von Nahrungsmitteln, von der Art die eine Umschließung (1) aufweist, welche über Mittel zum Erzeugen von Kaltluft (2) sowie über Mittel zum Blasen (3) der besagten erzeugten Kaltluft in Richtung auf die besagten Nahrungsmittel verfügt, wobei die besagten Nahrungsmittel in der besagten Umschließung (1) mit Hilfe eines über einen gekühlten Boden (4) laufenden dünnen Bandes vorbeilaufen,
**dadurch gekennzeichnet, dass** sie mindestens ein kastenförmiges Gehäuse aufweist, in welches die besagte Kaltluft eingeblasen wird, wobei das besagte kastenförmige Gehäuse über Schlitze (51) verfügt, so dass ein lamellarer Kaltluftstrom erzeugt wird, der auf die besagten Nahrungsmittel gerichtet ist, wobei mindestens einige der besagten Schlitze (51) zumindest der Länge nach durch zwei sich gegenüberliegende und auf die besagten Schlitze (51) hin zulaufende Längswände begrenzt sind, wobei die besagten Längswände durch Seitenwände (53) miteinander verbunden sind, um eine Düse (5) zu bilden, wobei die besagten Seitenwände (53) im Wesentlichen in Richtung der besagten Schlitze (51) auseinanderstreben und dadurch,
dass das besagte kastenförmige Gehäuse Paare von Verlängerungen (54) aufweist, die sich von den Schlitzen (51) ausgehend in Richtung der Nahrungsmittel erstrecken, wobei die besagten Verlängerungen (54) eines Paares den besagten Schlitz (51) der Länge nach begrenzen und dabei auseinanderstreben.

2. Vorrichtung zur Kühlung nach Anspruch 1, **dadurch gekennzeichnet, dass** die besagten Schlitze (51) sich in etwa senkrecht zur Laufrichtung der besagten Nahrungsmittel erstrecken.

3. Vorrichtung zur Kühlung nach den Ansprüchen 1 und 2, **dadurch gekennzeichnet, dass** die besagten Schlitze (51) sich in etwa über die gesamte Breite des besagten Bodens (4) erstrecken und,
dass sie in etwa über die gesamte Länge des besagten Bodens (4) im Verhältnis zur Achse der Laufrichtung der besagten Nahrungsmittel verteilt sind.

4. Vorrichtung zur Kühlung nach Anspruch 1, **dadurch gekennzeichnet, dass** die besagten Schlitze (51) sich in etwa über die gesamte Länge des besagten Bodens (4) erstrecken und,
dass sie in etwa über die gesamte Breite des besagten Bodens (4) im Verhältnis zur Achse der Laufrichtung der besagten Nahrungsmittel verteilt sind.

5. Vorrichtung zur Kühlung nach einem der Ansprüche 1 bis 4, **dadurch gekennzeichnet, dass** das besagte kastenförmige Gehäuse über Mittel zum Lenken (52) der besagten Kaltluft zu den besagten Schlitzen (51) hin verfügt.

6. Vorrichtung zur Kühlung nach einem der Ansprüche 1 bis 5, **dadurch gekennzeichnet, dass** das besagte kastenförmige Gehäuse so dimensioniert ist, dass ein Raum (d) zwischen diesem Gehäuse und den Wänden der besagten Umschließung (1) freigehalten wird, um eine Rückführung der Kaltluft vom besagten Boden (4) zu den besagten Blasmitteln (3) zu ermöglichen.

7. Vorrichtung zur Kühlung nach einem der Ansprüche 1 bis 6, **dadurch gekennzeichnet, dass** die jeweiligen Enden der besagten Düsen (5) einen Abstand voneinander aufweisen.
